# EUROPEAN PATENT SPECIFICATION

(11) **EP 3 869 712 B1**
(45) Date of publication and mention of the grant of the patent: **28.02.2024**
(21) Application number: 19883083.8
(22) Date of filing: 30.09.2019
(51) Int. Cl.: H04B 15/02, H04K 3/00

(54) **ELECTROMAGNETIC INTERFERENCE CONTROL METHOD AND RELATED APPARATUS**
VERFAHREN ZUR KONTROLLE ELEKTROMAGNETISCHER INTERFERENZEN UND ZUGEHÖRIGE VORRICHTUNG
PROCÉDÉ DE LIMITATION DE BROUILLAGE ÉLECTROMAGNÉTIQUE ET APPAREIL ASSOCIÉ

(30) Priority: 07.11.2018 CN 201811321596
(43) Date of publication of application: 25.08.2021
(73) Proprietor: GUANGDONG OPPO MOBILE TELECOMMUNICATIONS CORP., LTD., Dongguan, Guangdong 523860 (CN)
(72) Inventor: TANG, Kai, Dongguan, Guangdong 523860 (CN); TAN, Zhengpeng, Dongguan, Guangdong 523860 (CN); CHEN, Yun, Dongguan, Guangdong 523860 (CN); WANG, Lizhong, Dongguan, Guangdong 523860 (CN); YANG, Hai, Dongguan, Guangdong 523860 (CN)
(74) Representative: Manitz Finsterwald Patent- und Rechtsanwaltspartnerschaft mbB
(86) International application number: PCT/CN2019/109448
(87) International publication number: WO 2020/093823

(56) References cited:
- CN-A- 103 905 654
- CN-A- 103 974 267
- CN-A- 106 936 515
- CN-A- 108 063 646
- CN-A- 108 601 037
- CN-A- 109 361 475
- US-A1- 2017 171 366
- US-A1- 2018 234 191

## Description

### TECHNICAL FIELD

This disclosure relates to the technical field of electronic devices, and particularly to a method for electromagnetic interference control and related devices.

### BACKGROUND

With the development of mobile communication technology, users have an increasing demand for communication with electronic devices such as mobile phones. Currently, electronic devices on the market generally transmit data through cellular mobile network communications or wireless fidelity (Wi-Fi) communications. However, full-screen mobile phones are facing problems like radio frequency interference. An integrated driver chip of a display screen of the full-screen mobile phone has extended to an antenna clearance area, and in this case, frequency multiplication/division of a mobile industry processor interface (MIPI) frequency of the display screen can cause interference to a radio frequency antenna, which results in a relatively low total isotropic sensitivity (TIS) of the antenna. Related technologies are known from CN 106 936 515 A, CN 108 063 646 A, US 2018/0234191 A1, and US 2017/0171366 A1.

### SUMMARY

The present invention is defined in the independent claims. According to implementations, a method for electromagnetic interference control and related devices are provided, which can improve stability of communication of an electronic device in a game scene.

In a first aspect of the disclosure, a method for electromagnetic interference control is provided. The method is for an electronic device. The method includes the following. In response to detecting that the electronic device is in a preset scene, electromagnetic interference between a radio frequency system and a display screen of the electronic device is detected, where the preset scene includes a game scene. In response to the detected electromagnetic interference, a real-time requirement of the preset scene is determined. An interference control strategy adapted to the real-time requirement of the preset scene is obtained. Electromagnetic interference of a mobile industry processor interface (MIPI) of the display screen to the radio frequency system is reduced or eliminated based on the interference control strategy.

In a second aspect of the disclosure, an electronic device is provided. The electronic device includes a processor, a memory, a communication interface, and one or more programs. The one or more programs are stored in the memory and configured to be executed by the processor. The programs include instructions which are operable with the processor to execute the operations of the method in the first aspect of the disclosure.

In a third aspect of the disclosure, a computer-readable storage medium is provided. The computer-readable storage medium stores a computer program for electronic data interchange. The computer program is operable with a computer to execute part or all of the operations of the method in the first aspect of the disclosure.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device reduces or eliminates electromagnetic interference of an MIPI of the display screen to the radio frequency system based on the interference control strategy. As can be seen, after detecting that there is electromagnetic interference between the radio frequency system and the display screen, the electronic device can adopt, according to a current scene (i.e., detected scene), the interference control strategy to perform interference control. In this way, electromagnetic interference of the MIPI of the display screen to the radio frequency system can be eliminated or reduced, thereby improving stability of communication in the game scene and facilitating obtaining the best game experience.

### BRIEF DESCRIPTION OF THE DRAWINGS

In order to describe technical solutions of implementations or the related art more clearly, the following will give a brief description of accompanying drawings used for describing the implementations or the related art. Apparently, accompanying drawings described below are merely some implementations. Those of ordinary skill in the art can also obtain other accompanying drawings based on the accompanying drawings described below without creative efforts.
FIG. 1 is an exemplary architecture diagram of a wireless communication system according to implementations.
FIG. 2 is a schematic flowchart illustrating a method for electromagnetic interference control according to implementations.
FIG. 3 is a schematic flowchart illustrating a method for electromagnetic interference control according to other implementations.
FIG. 4 is a schematic flowchart illustrating a method for electromagnetic interference control according to other implementations.
FIG. 5 is a schematic flowchart illustrating a method for electromagnetic interference control according to other implementations.
FIG. 6 is a schematic flowchart illustrating a method for electromagnetic interference control according to other implementations.
FIG. 7 is a schematic structural diagram illustrating an electronic device according to implementations.
FIG. 8 is a block diagram illustrating functional units of a device for electromagnetic interference control according to implementations.

### DETAILED DESCRIPTION

In order for those skilled in the art to better understand technical solutions of implementations of the disclosure, the technical solutions of the implementations will be described clearly and completely with reference to accompanying drawings in the implementations. Apparently, implementations described hereinafter are merely some implementations, rather than all implementations of the disclosure. All other implementations obtained by those of ordinary skill in the art based on the implementations without creative efforts shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or device including a series of steps or units is not limited to listed steps or units, on the contrary, it can optionally include other steps or units that are not listed; alternatively, other steps or units inherent to the process, method, product, or device can be included either.

The term "implementation" referred to herein means that particular features, structures, or properties described in conjunction with the implementations may be defined in at least one implementation of the disclosure. The phrase "implementation" appearing in various places in the specification does not necessarily refer to the same implementation or an independent/ alternative implementation that is mutually exclusive with other implementations. Those skilled in the art will understand expressly and implicitly that an implementation described herein may be combined with other implementations.

"Electronic device" in implementations of the disclosure may be an electronic device with a Wi-Fi radio frequency system. The Electronic device may include various handheld devices with wireless communication functions, on-board devices, wearable devices, computing devices, or other processing devices connected to a wireless modem, as well as various forms of user equipment (UE), mobile stations (MS), terminal devices, etc.

Hereinafter, implementations of the disclosure will be described in detail.

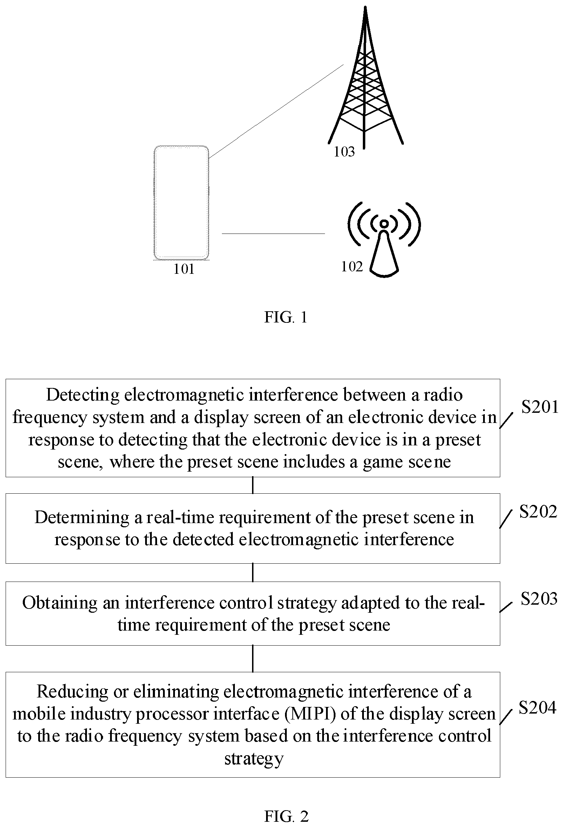

At present, an electronic device 101 may be connected to a base station 103 and/or a wireless hotspot 102, as illustrated in FIG. 1. In the case that the electronic device 101 is connected to the base station 103, data interaction between the electronic device 101 and the base station 103 can be implemented through a mobile communication network, such as a voice call service in a long term evolution (LTE). In the case that the electronic device 101 is connected to the wireless hotspot 102, data interaction between the electronic device 101 and the wireless hotspot 102 can be implemented through a wireless local area network, such as an IP multimedia subsystem (IMS) voice call service.

FIG. 2 is a schematic flowchart illustrating a method for electromagnetic interference control according to implementations. The method is for an electronic device. As illustrated in FIG. 2, the method for electromagnetic interference control includes the following.

At block 5201, in response to detecting that the electronic device is in a preset scene, the electronic device detects electromagnetic interference between a radio frequency system and a display screen of the electronic device, where the preset scene includes a game scene.

When the electronic device communicates with a wireless hotspot, the radio frequency system may select different communication channels for data transmission. Each communication channel corresponds to a frequency domain resource defined by a protocol (e.g., a global system for mobile communication (GSM) frequency band, an LTE B8B20B28 frequency band, etc.). According to relevant communication protocols, the electronic device can use one or more different communication channels in a same service processing period when the electronic device handles different services. The electronic device in a preset scene may refer to that the electronic device is in a game scene, for example, the electronic device runs a game App by using Wi-Fi data. Upon detecting that the electronic device is in the preset scene, a Wi-Fi module reports in real time information of a channel(s) currently working.

At block 5202, in response to the detected electromagnetic interference, the electronic device determines a real-time requirement of the preset scene.

Depending on the capability of a chip, a mobile industry processor interface (MIPI) frequency of the display screen may support different frequencies or frequency bands, such as 514.5 MHz, 516.5 MHz, and so on. When running a game APP through Wi-Fi, there will be interference between an MIPI of the display screen and a Wi-Fi channel if frequency conflict occurs.

At block S203, the electronic device obtains an interference control strategy adapted to the real-time requirement of the preset scene.

According to the real-time requirement determined at block 5202, a preconfigured interference control strategy corresponding to the determined real-time requirement is obtained.

At block 5204, the electronic device reduces or eliminates electromagnetic interference of an MIPI of the display screen to the radio frequency system based on the interference control strategy.

In some implementations, according to the interference control strategy corresponding to the determined real-time requirement, select a target frequency with no interference or the minimum interference for frequency hopping, switch to a data network, or negotiate channel switching with a router to avoid interference.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device reduces or eliminates electromagnetic interference of an MIPI of the display screen to the radio frequency system based on the interference control strategy. As can be seen, after detecting that there is electromagnetic interference between the radio frequency system and the display screen, the electronic device can adopt, according to a current scene (i.e., detected scene), the interference control strategy to perform interference control. In this way, electromagnetic interference of the MIPI of the display screen to the radio frequency system can be eliminated or reduced, thereby improving stability of communication in the game scene and facilitating obtaining the best game experience.

In some implementations, electromagnetic interference between the radio frequency system and the display screen of the electronic device is detected as follows. At least one detection value of a first frequency and a detection value of a second frequency are obtained, where the first frequency is a communication frequency of the radio frequency system, and the second frequency is an MIPI frequency of the display screen. According to a preset interference channel list, the at least one detection value of the first frequency and the detection value of the second frequency, electromagnetic interference between the radio frequency system and the display screen of the electronic device is determined, where the preset interference channel list contains levels of interference (i.e., interference level) of an operating frequency of the MIPI of the display screen on different channels.

The preset interference channel list contains magnitudes and levels of interference of different operating frequencies of the MIPI of the display screen to different Wi-Fi channels. Based on the detection value of the second frequency and the at least one detection value of the first frequency, determine, in the interference channel list, whether there is a detection value of the first frequency causing interference with respect to the detection value of the second frequency, so as to determine whether there is electromagnetic interference between the radio frequency system and the display screen.

In some implementations, the at least one detection value of the first frequency and the detection value of the second frequency may be obtained as follows. When running a game APP, a Wi-Fi module reports information (e.g., first frequency) of at least one channel currently working to the AP. After receiving the information of the at least one channel, the AP obtains a current MIPI frequency (i.e., second frequency) of the screen.

As can be seen, the electronic device can perform frequency comparison based on the interference channel list, to quickly determine whether there is electromagnetic interference between a frequency currently used by the MIPI of the display screen and any of the at least one detection value of the first frequency. In this way, an electromagnetic interference scene can be determined quickly based on a real-time detection value, thereby improving detection efficiency.

In some implementations, the electronic device includes a central processing unit (CPU). The real-time requirement of the preset scene is determined as follows. The load of the CPU (i.e., CPU load) corresponding to the preset scene is detected. The real-time requirement of the preset scene is determined according to the detected load.

After the CPU load corresponding to the preset scene is detected, the real-time requirement of the preset scene can be determined according to the detected CPU load and the preset CPU load corresponding to different real-time requirements. For example, the real-time CPU load (i.e., detected CPU load) corresponding to the preset scene can be obtained from a task manager, which is 5~10%, and if the preset CPU load corresponding to a high real-time requirement is greater than 5%, it can be determined that the preset scene currently running has a high real-time requirement.

In some implementations, a value of the (preset) CPU load corresponding to a high real-time requirement can be set in advance according to the historical CPU load (i.e., previous CPU load) corresponding to different real-time requirements of the preset scene, which is not limited in the disclosure.

As can be seen, the electronic device can determine, according to the CPU load corresponding to the preset scene and the CPU load corresponding to different real-time requirements of the preset scene, the real-time requirement of the preset scene when the electronic device is in the preset scene, so as to determine a real-time requirement of the preset scene in the presence of electromagnetic interference.

In some implementations, the electronic device includes a graphic processing unit (GPU). The real-time requirement of the preset scene is determined as follows. The load of the GPU (i.e., GPU load) corresponding to the preset scene is detected. The real-time requirement of the preset scene is determined according to the detected load.

After the GPU load corresponding to the preset scene is detected, the real-time requirement of the preset scene can be determined according to the detected GPU load and the preset GPU load corresponding to different real-time requirements. For example, the real-time GPU load (i.e., detected GPU load) corresponding to the preset scene can be obtained from a task manager, which is 5~10%, and if the preset GPU load corresponding to a high real-time requirement is greater than 3%, it can be determined that the preset scene currently running has a high real-time requirement.

In some implementations, a value of the (preset) GPU load corresponding to a high real-time requirement can be set in advance according to the historical GPU load (i.e., previous GPU load) corresponding to different real-time requirements of the preset scene, which is not limited in the disclosure.

As can be seen, the electronic device can determine, according to the GPU load corresponding to the preset scene and the GPU load corresponding to different real-time requirements of the preset scene, the real-time requirement of the preset scene when the electronic device is in the preset scene, so as to determine a real-time requirement of the preset scene in the presence of electromagnetic interference.

In some implementations, the electronic device includes a game module. The real-time requirement of the preset scene is determined as follows. The game module detects whether the preset scene is a preset scene with a high real-time requirement.

As can be seen, the electronic device can determine, according to a real-time parameter of the game module and the preset scene, the real-time requirement of the preset scene when the electronic device is in the preset scene.

In some implementations, the interference control strategy adapted to the real-time requirement of the preset scene is obtained as follows. Query a preset interference-control-strategy set, where the interference-control-strategy set contains a correspondence relationship between interference control strategies and scenes with different real-time requirements. An interference control strategy corresponding to a scene with a high real-time requirement is obtained in condition of the preset scene with the high real-time requirement. An interference control strategy corresponding to a scene with a low real-time requirement is obtained in condition of the preset scene with the low real-time requirement.

An interference control strategy adopted by the electronic device varies with the real-time requirement. After the real-time requirement of the preset scene is determined, an interference control strategy corresponding to the determined real-time requirement is invoked from different interference control strategies corresponding to different real-time requirements.

As can be seen, the electronic device can adopt an interference control strategy corresponding to the real-time requirement of the preset scene, which can improve diversity and efficiency of an electromagnetic interference resolution mechanism, thereby improving stability of communication of the radio frequency system.

In some implementations, according to the interference control strategy corresponding to the scene with the high real-time requirement, the following is performed. An available frequency range or an available frequency of an MIPI frequency of the display screen is obtained. A first-frequency set is obtained, where the first-frequency set contains a frequency of at least one wireless channel used by the electronic device in the preset scene. According to the first-frequency set and any one of the available frequency range and the available frequency, a target frequency of the MIPI frequency of the display screen is determined. The MIPI frequency of the display screen is adjusted to the target frequency.

The electronic device can determine a target frequency according to at least one communication frequency enabled in the preset scene and any one of the available frequency range and the available frequency of the MIPI frequency of the display screen, where the target frequency has no interference or the minimum interference with any frequency in the first-frequency set. The wireless channel herein may be a wireless Wi-Fi channel. As an example, when a user is playing a game by using Wi-Fi data, if the electronic device is in a scene (e.g., team battles) with a high real-time requirement, the MIPI frequency of the display screen is 514.5 M, which has electromagnetic interference with a wireless Wi-Fi channel frequency, then frequency hopping is performed on the MIPI frequency of the display screen such that the MIPI frequency is in a frequency range that has no interference with the current wireless Wi-Fi channel frequency.

As can be seen, the electronic device can determine, according to the first-frequency set and any one of the available frequency range and the available frequency of the MIPI frequency of the display screen, the target frequency of the MIPI frequency, so as to avoid the radio frequency system of the electronic device in the current scene (i.e., detected preset scene) from being interfered by the MIPI of the display screen because the radio frequency system uses any frequency in the first-frequency set, thereby improving stability of communication of the radio frequency system.

In some implementations, network switching is performed as follows. An MIPI frequency of the display screen and an operating frequency of at least one data network are obtained. A target data network is determined according to the operating frequency of the at least one data network and the MIPI frequency of the display screen, where the target data network is one of the at least one data network which has the minimum interference with the MIPI frequency of the display screen. Switch data network according to the target data network.

According to the MIPI frequency of the display screen and the operating frequency of the at least one data network, the electronic device can determine, based on the channel interference list, a data network that causes no interference or the least interference to the MIPI frequency of the display screen as the target data network. Thus, the operating frequency of the target data network determined by the electronic device will has little or no electromagnetic interference with the MIPI frequency of the display screen. As an example, when a user is playing a game by using Wi-Fi data, if the electronic device is in a scene (e.g., team battles) with a high real-time requirement and the MIPI frequency has electromagnetic interference with a wireless Wi-Fi channel frequency, a wireless Wi-Fi network is switched to a data network to avoid interference.

As can be seen, according to the operating frequency of the at least one data network and the MIPI frequency of the display screen, the electronic device can determine the target data network, which causes the least interference to the MIPI frequency of the display screen, for network switch, so as to avoid the radio frequency system of the electronic device in the current scene from being interfered by the MIPI of the display screen because the radio frequency system uses a frequency of the fixed data network, thereby improving stability of communication of the radio frequency system.

In some implementations, network switching is performed as follows. An MIPI frequency of the display screen and an operating frequency of at least one wireless channel are obtained. A target wireless channel is determined according to the operating frequency of the at least one wireless channel and the MIPI frequency of the display screen, where the target wireless channel is one of the at least one wireless channel which has the minimum interference with the MIPI frequency of the display screen. Switch wireless channel according to the target wireless channel.

According to the MIPI frequency of the display screen and the operating frequency of the at least one wireless channel, the electronic device can determine, based on the channel interference list, a wireless channel that causes no interference or the least interference to the MIPI frequency of the display screen as the target wireless channel. Thus, the operating frequency of the target wireless channel determined by the electronic device will has little or no electromagnetic interference with the MIPI frequency of the display screen. The wireless channel may be a wireless Wi-Fi channel. As an example, when a user is playing a game by using Wi-Fi data, if the electronic device is in a scene (e.g., team battles) with a high real-time requirement and the MIPI frequency of the display screen has electromagnetic interference with a wireless Wi-Fi channel frequency, negotiate channel switching with a router to avoid interference.

As can be seen, according to the operating frequency of the at least one wireless channel and the MIPI frequency of the display screen, the electronic device can determine the target wireless channel, which causes the least interference to the MIPI frequency of the display screen, for negotiating wireless channel switching with the router, so as to avoid the radio frequency system of the electronic device in the current scene from being interfered by the MIPI of the display screen because the radio frequency system uses any frequency in the first-frequency set, thereby improving stability of communication of the radio frequency system.

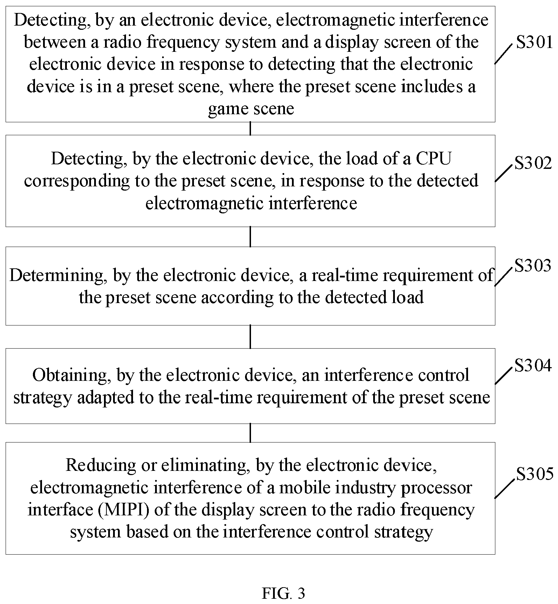

Similar to the above implementations described with reference to FIG. 2, FIG. 3 is a schematic flowchart illustrating a method for electromagnetic interference control according to implementations. The method is for an electronic device, and the electronic device includes a CPU. As illustrated in FIG. 3, the method for electromagnetic interference control includes the following.

At block S301, in response to detecting that the electronic device is in a preset scene, the electronic device detects electromagnetic interference between a radio frequency system and a display screen of the electronic device, where the preset scene includes a game scene.

At block S302, in response to the detected electromagnetic interference, the electronic device detects the load of the CPU corresponding to the preset scene.

At block S303, the electronic device determines a real-time requirement of the preset scene according to the detected load.

At block S304, the electronic device obtains an interference control strategy adapted to the real-time requirement of the preset scene.

At block S305, the electronic device reduces or eliminates electromagnetic interference of an MIPI of the display screen to the radio frequency system based on the interference control strategy.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device reduces or eliminates electromagnetic interference of an MIPI of the display screen to the radio frequency system based on the interference control strategy. As can be seen, after detecting that there is electromagnetic interference between the radio frequency system and the display screen, the electronic device can adopt, according to the current scene, the interference control strategy to perform interference control. In this way, electromagnetic interference of the MIPI of the display screen to the radio frequency system can be eliminated or reduced, thereby improving stability of communication in the game scene and facilitating obtaining the best game experience.

Furthermore, the electronic device can determine, according to the CPU load corresponding to the preset scene and the CPU load corresponding to different real-time requirements of the preset scene, the real-time requirement of the preset scene when the electronic device is in the preset scene, so as to determine a real-time requirement of the preset scene in the presence of electromagnetic interference. Accordingly, the interference control strategy corresponding to the determined real-time requirement is determined.

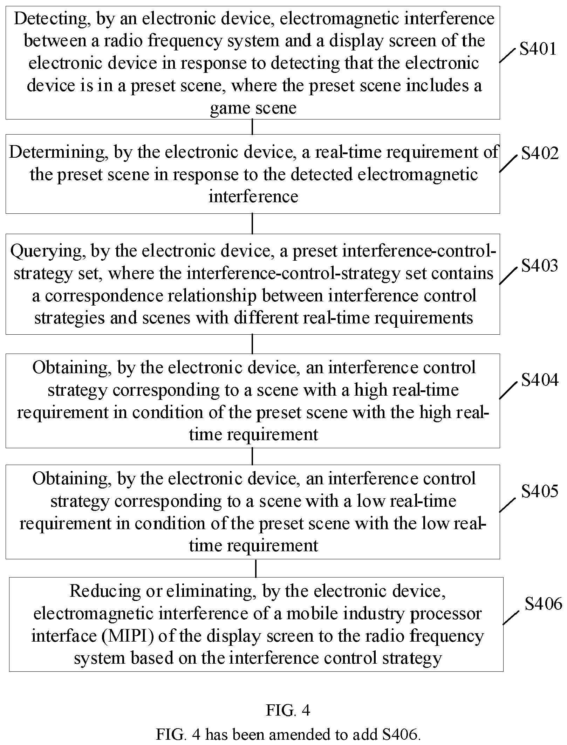

Similar to the above implementations described with reference to FIG. 2, FIG. 4 is a schematic flowchart illustrating a method for electromagnetic interference control according to implementations. The method is for an electronic device, and the electronic device includes a CPU. As illustrated in FIG. 4, the method for electromagnetic interference control includes the following.

At block S401, in response to detecting that the electronic device is in a preset scene, the electronic device detects electromagnetic interference between a radio frequency system and a display screen of the electronic device, where the preset scene includes a game scene.

At block S402, in response to the detected electromagnetic interference, the electronic device determines a real-time requirement of the preset scene.

At block S403, the electronic device queries a preset interference-control-strategy set, where the interference-control-strategy set contains a correspondence relationship between interference control strategies and scenes with different real-time requirements.

At block S404, the electronic device obtains an interference control strategy corresponding to a scene with the high real-time requirement in condition of the preset scene with the high real-time requirement.

At block S405, the electronic device obtains an interference control strategy corresponding to a scene with the low real-time requirement in condition of the preset scene with the low real-time requirement.

At block S406, the electronic device reduces or eliminates electromagnetic interference of an MIPI of the display screen to the radio frequency system based on the interference control strategy.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device reduces or eliminates electromagnetic interference of an MIPI of the display screen to the radio frequency system based on the interference control strategy. As can be seen, after detecting that there is electromagnetic interference between the radio frequency system and the display screen, the electronic device can adopt, according to the current scene, the interference control strategy to perform interference control. In this way, electromagnetic interference of the MIPI of the display screen to the radio frequency system can be eliminated or reduced, thereby improving stability of communication in the game scene and facilitating obtaining the best game experience.

Furthermore, the electronic device can adopt an interference control strategy corresponding to the real-time requirement of the preset scene, which can improve diversity and efficiency of an electromagnetic interference resolution mechanism, thereby improving stability of communication of the radio frequency system.

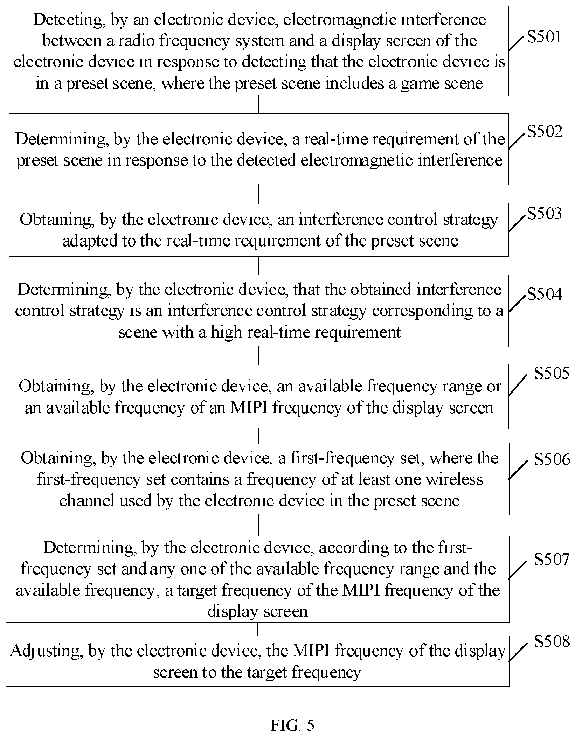

Similar to the above implementations described with reference to FIG. 2, FIG. 5 is a schematic flowchart illustrating a method for electromagnetic interference control according to implementations. The method is for an electronic device. As illustrated in FIG. 5, the method for electromagnetic interference control includes the following.

At block S501, in response to detecting that the electronic device is in a preset scene, the electronic device detects electromagnetic interference between a radio frequency system and a display screen of the electronic device, where the preset scene includes a game scene.

At block S502, in response to the detected electromagnetic interference, the electronic device determines a real-time requirement of the preset scene.

At block S503, the electronic device obtains an interference control strategy adapted to the real-time requirement of the preset scene.

At block S504, the electronic device determines that the obtained interference control strategy is an interference control strategy corresponding to a scene with a high real-time requirement.

At block S505, the electronic device obtains an available frequency range or an available frequency of an MIPI frequency of the display screen.

At block S506, the electronic device obtains a first-frequency set, where the first-frequency set contains a frequency of at least one wireless channel used by the electronic device in the preset scene.

At block S507, the electronic device determines, according to the first-frequency set and any one of the available frequency range and the available frequency, a target frequency of the MIPI frequency of the display screen.

At block S508, the electronic device adjusts the MIPI frequency of the display screen to the target frequency.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device reduces or eliminates electromagnetic interference of an MIPI of the display screen to the radio frequency system based on the interference control strategy. As can be seen, after detecting that there is electromagnetic interference between the radio frequency system and the display screen, the electronic device can adopt, according to the current scene, the interference control strategy to perform interference control. In this way, electromagnetic interference of the MIPI of the display screen to the radio frequency system can be eliminated or reduced, thereby improving stability of communication in the game scene and facilitating obtaining the best game experience.

Furthermore, the electronic device can determine, according to the first-frequency set and any one of the available frequency range and the available frequency of the MIPI frequency of the display screen, the target frequency of the MIPI frequency, so as to avoid the radio frequency system of the electronic device in the current scene from being interfered by the MIPI of the display screen because the radio frequency system uses any frequency in the first-frequency set, thereby improving stability of communication of the radio frequency system.

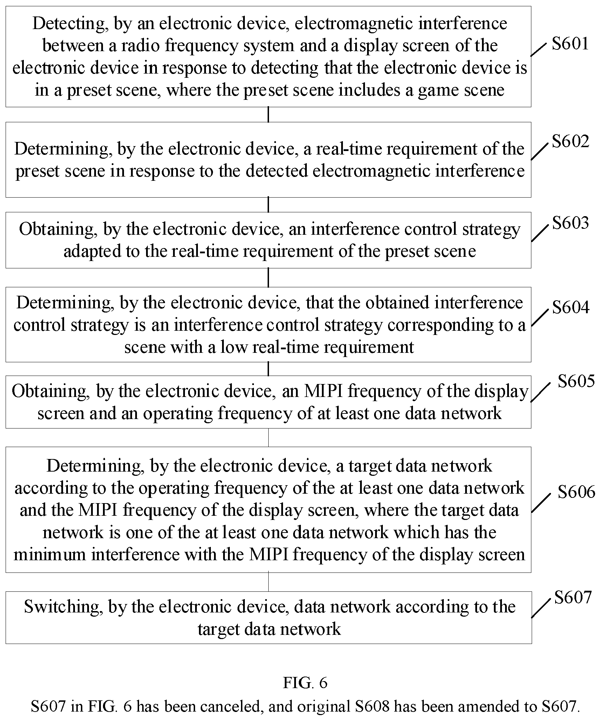

Similar to the above implementations described with reference to FIG. 2, FIG. 6 is a schematic flowchart illustrating a method for electromagnetic interference control according to implementations. The method is for an electronic device. As illustrated in FIG. 6, the method for electromagnetic interference control includes the following.

At block S601, in response to detecting that the electronic device is in a preset scene, the electronic device detects electromagnetic interference between a radio frequency system and a display screen of the electronic device, where the preset scene includes a game scene.

At block S602, in response to the detected electromagnetic interference, the electronic device determines a real-time requirement of the preset scene.

At block S603, the electronic device obtains an interference control strategy adapted to the real-time requirement of the preset scene.

At block S604, the electronic device determines that the obtained interference control strategy is an interference control strategy corresponding to a scene with a low real-time requirement.

At block S605, the electronic device obtains an MIPI frequency of the display screen and an operating frequency of at least one data network.

At block S606, the electronic device determines a target data network according to the operating frequency of the at least one data network and the MIPI frequency of the display screen, where the target data network is one of the at least one data network which has the minimum interference with the MIPI frequency of the display screen.

At block S607, the electronic device performs data network switching according to the target data network.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device reduces or eliminates electromagnetic interference of an MIPI of the display screen to the radio frequency system based on the interference control strategy. As can be seen, after detecting that there is electromagnetic interference between the radio frequency system and the display screen, the electronic device can adopt, according to the current scene, the interference control strategy to perform interference control. In this way, electromagnetic interference of the MIPI of the display screen to the radio frequency system can be eliminated or reduced, thereby improving stability of communication in the game scene and facilitating obtaining the best game experience.

Furthermore, according to the operating frequency of the at least one data network and the MIPI frequency of the display screen, the electronic device can determine the target data network, which causes the least interference to the MIPI frequency of the display screen, for network switch, so as to avoid the radio frequency system of the electronic device in the current scene from being interfered by the MIPI of the display screen because the radio frequency system uses a frequency of the fixed data network, thereby improving stability of communication of the radio frequency system.

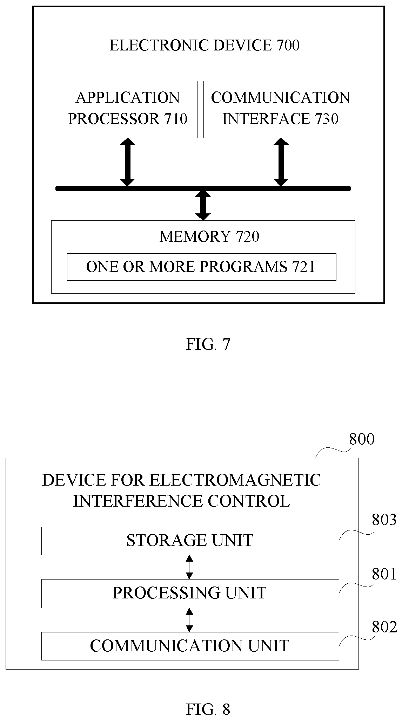

Similar to the above implementations described with reference to FIG. 2, FIG. 7 is a schematic structural diagram illustrating an electronic device 700 according to implementations. As illustrated in FIG. 7, the electronic device 700 includes an application processor 710, a memory 720, a communication interface 730, and one or more programs 721. The one or more programs 721 are stored in the memory 720 and configured to be executed by the application processor 710. The one or more programs 721 include instructions which are operable to execute the following operations. In response to detecting that the electronic device is in a preset scene, electromagnetic interference between a radio frequency system and a display screen of the electronic device is detected, where the preset scene includes a game scene. In response to the detected electromagnetic interference, a real-time requirement of the preset scene is determined. An interference control strategy adapted to the real-time requirement of the preset scene is obtained. Interference control is performed according to the interference control strategy to reduce or eliminate electromagnetic interference of an MIPI of the display screen to the radio frequency system.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device performs interference control according to the interference control strategy to reduce or eliminate electromagnetic interference of an MIPI of the display screen to the radio frequency system. As can be seen, after detecting that there is electromagnetic interference between the radio frequency system and the display screen, the electronic device can adopt, according to the current scene, the interference control strategy to perform interference control. In this way, electromagnetic interference of the MIPI of the display screen to the radio frequency system can be eliminated or reduced, thereby improving stability of communication in the game scene and facilitating obtaining the best game experience.

In some implementations, the instructions of the programs operable with the application processor to detect electromagnetic interference between the radio frequency system and the display screen of the electronic device are operable with the application processor to: obtain at least one detection value of a first frequency and a detection value of a second frequency, where the first frequency is a communication frequency of the radio frequency system, and the second frequency is an MIPI frequency of the display screen; and determine, according to a preset interference channel list as well as the at least one detection value of the first frequency and the detection value of the second frequency, electromagnetic interference between the radio frequency system and the display screen of the electronic device, where the preset interference channel list contains levels of interference of an operating frequency of the MIPI of the display screen to different channels.

In some implementations, the electronic device includes a CPU. The instructions of the programs operable with the application processor to determine the real-time requirement of the preset scene are operable with the application processor to: detect the load of the CPU corresponding to the preset scene; and determine the real-time requirement of the preset scene according to the detected load.

In some implementations, the electronic device includes a GPU. The instructions of the programs operable with the application processor to determine the real-time requirement of the preset scene are operable with the application processor to: detect the load of the GPU corresponding to the preset scene; and determine the real-time requirement of the preset scene according to the detected load.

In some implementations, the electronic device includes a game module. The instructions of the programs operable with the application processor to determine the real-time requirement of the preset scene are operable with the application processor to detect, with the game module, whether the preset scene is a preset scene with a high real-time requirement.

In some implementations, the instructions of the programs operable with the application processor to obtain the interference control strategy adapted to the real-time requirement of the preset scene are operable with the application processor to: query a preset interference-control-strategy set, where the interference-control-strategy set contains a correspondence relationship between interference control strategies and scenes with different real-time requirements; obtain an interference control strategy corresponding to a scene with a high real-time requirement when the preset scene is a scene with the high real-time requirement; and obtain an interference control strategy corresponding to a scene with a low real-time requirement when the preset scene is a scene with the low real-time requirement.

In some implementations, the instructions of the programs operable with the application processor to perform interference control according to the interference control strategy to reduce or eliminate the electromagnetic interference of the MIPI of the display screen to the radio frequency system are operable with the application processor to: obtain an available frequency range or an available frequency of an MIPI frequency of the display screen in response to the interference control strategy corresponding to a scene with a high real-time requirement; obtain a first-frequency set, where the first-frequency set contains a frequency of at least one wireless channel used by the electronic device in the preset scene; determine, according to the first-frequency set and any one of the available frequency range and the available frequency, a target frequency of the MIPI frequency of the display screen; and adjust the MIPI frequency of the display screen to the target frequency.

In some implementations, the instructions of the programs operable with the application processor to perform interference control according to the interference control strategy to reduce or eliminate the electromagnetic interference of the MIPI of the display screen to the radio frequency system are operable with the application processor to: obtain an MIPI frequency of the display screen and an operating frequency of at least one data network in response to the interference control strategy corresponding to a scene with a low real-time requirement; determine a target data network according to the operating frequency of the at least one data network and the MIPI frequency of the display screen, where the target data network is one of the at least one data network which has the minimum interference with the MIPI frequency of the display screen; and perform data network switching according to the target data network.

In some implementations, the instructions of the programs operable with the application processor to perform interference control according to the interference control strategy to reduce or eliminate the electromagnetic interference of the MIPI of the display screen to the radio frequency system are operable with the application processor to: obtain an MIPI frequency of the display screen and an operating frequency of at least one wireless channel in response to the interference control strategy corresponding to a scene with a low real-time requirement; determine a target wireless channel according to the operating frequency of the at least one wireless channel and the MIPI frequency of the display screen, where the target wireless channel is one of the at least one wireless channel which has the minimum interference with the MIPI frequency of the display screen; and perform wireless channel switching according to the target wireless channel.

The foregoing technical solutions of the implementations of the disclosure are mainly described from the viewpoint of execution of the method. It can be understood that, in order to implement the above functions, the electronic device includes hardware structures and/or software modules corresponding to the respective functions. Those skilled in the art should readily recognize that, in combination with the exemplary units and scheme steps or operations described in the implementations disclosed herein, the disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the disclosure.

According to the implementations of the disclosure, functional units may be divided for the mobile terminal in accordance with the foregoing method examples. For example, functional units may be divided according to corresponding functions, and two or more functions may be integrated into one processing unit. The above-mentioned integrated unit can be implemented in the form of hardware or software functional units. It should be noted that the division of units in implementations of the disclosure is schematic and is merely a logical function division; there may be other division manners in actual implementation.

FIG. 8 is a block diagram illustrating functional units of a device 800 for electromagnetic interference control according to implementations. The device 800 is applicable to an electronic device. The device 800 includes a processing unit 801 and a communication unit 802. The processing unit 801 is configured to detect electromagnetic interference between a radio frequency system and a display screen of the electronic device in response to detecting that the electronic device is in a preset scene, the preset scene includes a game scene. The processing unit 801 is configured to determine a real-time requirement of the preset scene in response to the detected electromagnetic interference. The processing unit 801 is configured to obtain an interference control strategy adapted to the real-time requirement of the preset scene. The processing unit 801 is configured to perform interference control according to the interference control strategy to reduce or eliminate electromagnetic interference of an MIPI of the display screen to the radio frequency system.

The device 800 for electromagnetic interference control may further include a storage unit 803. The storage unit 803 is configured to store program codes and data of the electronic device. The processing unit 801 may be a processor. The communication unit 802 may be a touch screen or a transceiver. The storage unit 803 may be a memory.

In implementations of the disclosure, the electronic device detects electromagnetic interference between a radio frequency system and a display screen of the electronic device in response to detecting that the electronic device is in a preset scene, where the preset scene includes a game scene. The electronic device determines a real-time requirement of the preset scene in response to the detected electromagnetic interference. The electronic device obtains an interference control strategy adapted to the real-time requirement of the preset scene. The electronic device performs interference control according to the interference control strategy to reduce or eliminate electromagnetic interference of an MIPI of the display screen to the radio frequency system. As can be seen, after detecting that there is electromagnetic interference between the radio frequency system and the display screen, the electronic device can adopt, according to the current scene, the interference control strategy to perform interference control. In this way, electromagnetic interference of the MIPI of the display screen to the radio frequency system can be eliminated or reduced, thereby improving stability of communication in the game scene and facilitating obtaining the best game experience.

In some implementations, the processing unit 801 configured to detect electromagnetic interference between the radio frequency system and the display screen of the electronic device is configured to: obtain at least one detection value of a first frequency and a detection value of a second frequency, where the first frequency is a communication frequency of the radio frequency system, and the second frequency is an MIPI frequency of the display screen; and determine, according to a preset interference channel list as well as the at least one detection value of the first frequency and the detection value of the second frequency, electromagnetic interference between the radio frequency system and the display screen of the electronic device, where the preset interference channel list contains levels of interference of an operating frequency of the MIPI of the display screen to different channels.

In some implementations, the electronic device includes a CPU. The processing unit 801 configured to determine the real-time requirement of the preset scene is configured to: detect the load of the CPU corresponding to the preset scene; and determine the real-time requirement of the preset scene according to the detected load.

In some implementations, the electronic device includes a GPU. The processing unit 801 configured to determine the real-time requirement of the preset scene is configured to: detect the load of the GPU corresponding to the preset scene; and determine the real-time requirement of the preset scene according to the detected load.

In some implementations, the electronic device includes a game module. The processing unit 801 configured to determine the real-time requirement of the preset scene is configured to detect, with the game module, whether the preset scene is a preset scene with a high real-time requirement.

In some implementations, the processing unit 801 configured to obtain the interference control strategy adapted to the real-time requirement of the preset scene is configured to: query a preset interference-control-strategy set, where the interference-control-strategy set contains a correspondence relationship between interference control strategies and scenes with different real-time requirements; obtain an interference control strategy corresponding to a scene with a high real-time requirement when the preset scene is a scene with the high real-time requirement; and obtain an interference control strategy corresponding to a scene with a low real-time requirement when the preset scene is a scene with the low real-time requirement.

In some implementations, the processing unit 801 configured to perform interference control according to the interference control strategy to reduce or eliminate the electromagnetic interference of the MIPI of the display screen to the radio frequency system is configured to: when the interference control strategy is an interference control strategy corresponding to a scene with a high real-time requirement: obtain an available frequency range or an available frequency of an MIPI frequency of the display screen; obtain a first-frequency set, where the first-frequency set contains a frequency of at least one wireless channel used by the electronic device in the preset scene; determine, according to the first-frequency set and any one of the available frequency range and the available frequency, a target frequency of the MIPI frequency of the display screen; and adjust the MIPI frequency of the display screen to the target frequency.

In some implementations, the processing unit 801 configured to perform interference control according to the interference control strategy to reduce or eliminate the electromagnetic interference of the MIPI of the display screen to the radio frequency system is configured to: when the interference control strategy is an interference control strategy corresponding to a scene with a low real-time requirement: obtain an MIPI frequency of the display screen and an operating frequency of at least one data network; determine a target data network according to the operating frequency of the at least one data network and the MIPI frequency of the display screen, where the target data network is one of the at least one data network which has the minimum interference with the MIPI frequency of the display screen; and perform data network switching according to the target data network.

In some implementations, the processing unit 801 configured to perform interference control according to the interference control strategy to reduce or eliminate the electromagnetic interference of the MIPI of the display screen to the radio frequency system is configured to: when the interference control strategy is an interference control strategy corresponding to a scene with a low real-time requirement: obtain an MIPI frequency of the display screen and an operating frequency of at least one wireless channel; determine a target wireless channel according to the operating frequency of the at least one wireless channel and the MIPI frequency of the display screen, where the target wireless channel is one of the at least one wireless channel which has the minimum interference with the MIPI frequency of the display screen; and perform wireless channel switching according to the target wireless channel.

According to implementations of the disclosure, a computer-readable storage medium is further provided. The computer-readable storage medium is configured to store a computer program for electronic data interchange. The computer program is operable with a computer to execute part or all of the operations of the method described in the foregoing method implementations. "Computer" referred to herein includes an electronic device.

According to implementations of the disclosure, a computer program product is further provided. The computer program product includes a non-transitory computer-readable storage medium configured to store a computer program. The computer program is operable with a computer to execute part or all of the operations of the method described in the foregoing method implementations. The computer program product may be a software installation package. "Computer" referred to herein includes an electronic device.

It is to be noted that, for the sake of simplicity, the foregoing method implementations are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In implementations of the disclosure, it should be understood that, the device/apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection or other forms of connection.

The units described as separate components may or may not be physically separated, the components illustrated as units may or may not be physical units, that is, they may be in the same place or may be distributed to multiple network elements. Part or all of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to execute all or part of the operations described in the various implementations of the disclosure. The memory includes various medium capable of storing program codes, such as a universal serial bus (USB), a read-only memory (ROM), a random access memory (RAM), a mobile hard disk, Disk, compact disc (CD), or other medium that can store program codes.

It will be understood by those of ordinary skill in the art that all or a part of the various methods of the implementations described above may be accomplished by means of a program to instruct associated hardware, the program may be stored in a computer-readable memory, which may include a flash memory, a ROM, a RAM, Disk or CD, and so on.

## Claims

1. A method for electromagnetic interference control for an electronic device and **characterized by** comprising:
detecting (S201, S301, S401, S501, S601) electromagnetic interference between a radio frequency system and a display screen of the electronic device in response to detecting that the electronic device is in a preset scene, the preset scene comprising a game scene;
in response to the detected electromagnetic interference,
detecting (S302) central processing unit, CPU, load corresponding to the preset scene, and determining (S303) a real-time requirement of the preset scene according to the detected load; or
detecting graphic processing unit, GPU, load corresponding to the preset scene, and determining the real-time requirement of the preset scene according to the detected load;
obtaining (S203, S304, S503, S603) an interference control strategy adapted to the real-time requirement of the preset scene, wherein the interference control strategy comprises selecting a target frequency with no interference or the minimum interference for frequency hopping, switching to a data network, or negotiating channel switching with a router; and
reducing or eliminating (S204, S305, S406) electromagnetic interference of a mobile industry processor interface, MIPI, of the display screen to the radio frequency system based on the interference control strategy.

2. The method of claim 1, wherein detecting electromagnetic interference between the radio frequency system and the display screen of the electronic device comprises:
obtaining at least one detection value of a first frequency and a detection value of a second frequency, wherein the first frequency is a communication frequency of the radio frequency system, and the second frequency is an MIPI frequency of the display screen; and
determining electromagnetic interference between the radio frequency system and the display screen of the electronic device according to a preset interference channel list, the at least one detection value of the first frequency and the detection value of the second frequency, wherein the preset interference channel list contains levels of interference of an operating frequency of the MIPI of the display screen on different channels.

3. The method of claim 1 or 2, wherein obtaining the interference control strategy adapted to the real-time requirement of the preset scene comprises:
querying (S403) a preset interference-control-strategy set, wherein the interference-control-strategy set contains a correspondence relationship between interference control strategies and scenes with different real-time requirements;
obtaining (S404) an interference control strategy corresponding to a scene with a high real-time requirement in condition of the preset scene with the high real-time requirement; and
obtaining (S405) an interference control strategy corresponding to a scene with a low real-time requirement in condition of the preset scene with the low real-time requirement.

4. The method of claim 1, wherein reducing or eliminating the electromagnetic interference of the MIPI of the display screen to the radio frequency system based on the interference control strategy comprises:
obtaining (S505) an available frequency range or an available frequency of an MIPI frequency of the display screen in response to the interference control strategy corresponding to a scene with a high real-time requirement;
obtaining (S506) a first-frequency set, wherein the first-frequency set contains a frequency of at least one wireless channel used by the electronic device in the preset scene;
determining (S507), according to the first-frequency set and any one of the available frequency range and the available frequency, a target frequency of the MIPI frequency of the display screen; and
adjusting (S508) the MIPI frequency of the display screen to the target frequency.

5. The method of claim 1, wherein reducing or eliminating the electromagnetic interference of the MIPI of the display screen to the radio frequency system based on the interference control strategy comprises:
obtaining (S605) an MIPI frequency of the display screen and an operating frequency of at least one data network in response to the interference control strategy corresponding to a scene with a low real-time requirement;
determining (S606) a target data network according to the operating frequency of the at least one data network and the MIPI frequency of the display screen, wherein the target data network is one of the at least one data network which has the minimum interference with the MIPI frequency of the display screen; and
switching (S607) data network according to the target data network.

6. The method of claim 1, wherein reducing or eliminating the electromagnetic interference of the MIPI of the display screen to the radio frequency system based on the interference control strategy comprises:
obtaining an MIPI frequency of the display screen and an operating frequency of at least one wireless channel in response to the interference control strategy corresponding to a scene with a low real-time requirement;
determining a target wireless channel according to the operating frequency of the at least one wireless channel and the MIPI frequency of the display screen, wherein the target wireless channel is one of the at least one wireless channel which has the minimum interference with the MIPI frequency of the display screen; and
switching wireless channel according to the target wireless channel.

7. An electronic device (700), comprising:
a processor (710);
a memory (720);
a communication interface (730); and
one or more programs, stored in the memory and configured to be executed by the processor;
the programs comprising instructions which are operable with the processor to execute the method of any of claims 1 to 6.

8. A computer-readable storage medium, storing a computer program for electronic data interchange, the computer program being operable with a computer to execute the method of any of claims 1 to 6.

## Patentansprüche

1. Verfahren zur Kontrolle elektromagnetischer Interferenzen für ein elektronisches Gerät und **dadurch gekennzeichnet, dass** es Folgendes umfasst:
Erkennen (S201, S301, S401, S501, S601) von elektromagnetischen Interferenzen zwischen einem Funkfrequenzsystem und einem Anzeigebildschirm des elektronischen Geräts in Reaktion auf das Erkennen, dass sich das elektronische Gerät in einer voreingestellten Szene befindet, wobei die voreingestellte Szene eine Spielszene umfasst;
in Reaktion auf die erkannten elektromagnetischen Interferenzen:
Erkennen (S302) einer Last der zentralen Verarbeitungseinheit (CPU), die der voreingestellten Szene entspricht, und Bestimmen (S303) einer Echtzeitanforderung der voreingestellten Szene gemäß der erkannten Last; oder
Erkennen einer Last der Grafikverarbeitungseinheit (GPU), die der voreingestellten Szene entspricht; und
Bestimmen der Echtzeitanforderung der voreingestellten Szene gemäß der erkannten Last;
Erhalten (S203, S304, S503, S603) einer Interferenzkontrollstrategie, die an die Echtzeitanforderungen der voreingestellten Szene angepasst ist, wobei die Interferenzkontrollstrategie das Auswählen einer Zielfrequenz ohne Interferenzen oder der minimalen Interferenzen für Frequenzsprung, Umschalten auf ein Datennetzwerk oder Aushandeln des Kanalwechsels mit einem Router umfasst; und
Reduzieren oder Beseitigen (S204, S305, S406) von elektromagnetischen Interferenzen einer Mobile Industry Processor Interface (MIPI) des Bildschirms mit dem Funkfrequenzsystem basierend auf der Interferenzkontrollstrategie.

2. Verfahren nach Anspruch 1, wobei das Erkennen von elektromagnetischen Interferenzen zwischen dem Funkfrequenzsystem und dem Anzeigebildschirm des elektronischen Geräts Folgendes umfasst:
Erhalten von mindesten einem Erkennungswert einer ersten Frequenz und einem Erkennungswert einer zweiten Frequenz, wobei die erste Frequenz eine Kommunikationsfrequenz des Funkfrequenzsystems und die zweite Frequenz eine MIPI-Frequenz des Anzeigebildschirms ist; und
Bestimmen von elektromagnetischen Interferenzen zwischen dem Funkfrequenzsystem und dem Anzeigebildschirm des elektronischen Geräts gemäß einer voreingestellten Interferenzkanalliste, die mindestens einen Erkennungswert der ersten Frequenz und den Erkennungswert der zweiten Frequenz enthält, wobei die voreingestellte Interferenzkanalliste Interferenzniveaus einer Betriebsfrequenz der MIPI des Anzeigebildschirms auf verschiedenen Kanälen enthält.

3. Verfahren nach Anspruch 1 oder 2, wobei das Erhalten der Interferenzkontrollstrategie, die an die Echtzeitanforderung der voreingestellten Szene angepasst ist, Folgendes umfasst:
Abfragen (S403) eines voreingestellten Interferenzkontrollstrategiesatzes, wobei der Interferenzkontrollstrategiesatz eine Korrespondenzbeziehung zwischen Interferenzkontrollstrategien und Szenen mit unterschiedlichen Echtzeitanforderungen enthält;
Erhalten (S404) einer Interferenzkontrollstrategie, die einer Szene mit einer hohen Echtzeitanforderung unter der Bedingung der voreingestellten Szene mit der hohen Echtzeitanforderung entspricht; und
Erhalten (S405) einer Interferenzkontrollstrategie, die einer Szene mit einer niedrigen Echtzeitanforderung unter der Bedingung der voreingestellten Szene mit der niedrigen Echtzeitanforderung entspricht.

4. Verfahren nach Anspruch 1, wobei das Reduzieren oder Beseitigen der elektromagnetischen Interferenzen der MIPI des Anzeigebildschirms mit dem Funkfrequenzsystem basierend auf der Interferenzkontrollstrategie Folgendes umfasst:
Erhalten (S505) eines verfügbaren Frequenzbereichs oder einer verfügbaren Frequenz einer MIPI-Frequenz des Anzeigebildschirms in Reaktion auf die Interferenzkontrollstrategie, die einer Szene mit einer hohen Echtzeitanforderung entspricht;
Erhalten (S506) eines ersten Frequenzsatzes, wobei der erste Frequenzsatz eine Frequenz von mindestens einem drahtlosen Kanal enthält, der von dem elektronischen Gerät in der voreingestellten Szene verwendet wird;
Bestimmen (S507), gemäß dem ersten Frequenzsatz und einem der verfügbaren Frequenzbereiche und der verfügbaren Frequenz, einer Zielfrequenz der MIPI-Frequenz des Anzeigebildschirms; und
Anpassen (S508) der MIPI-Frequenz des Anzeigebildschirms an die Zielfrequenz.

5. Verfahren nach Anspruch 1, wobei das Reduzieren oder Beseitigen der elektromagnetischen Interferenzen der MIPI des Anzeigebildschirms mit dem Funkfrequenzsystem basierend auf der Interferenzkontrollstrategie Folgendes umfasst:
Erhalten (S605) einer MIPI-Frequenz des Anzeigebildschirms und einer Betriebsfrequenz von mindestens einem Datennetzwerk in Reaktion auf die Interferenzkontrollstrategie, die einer Szene mit einer niedrigen Echtzeitanforderung entspricht;
Bestimmen (S606) eines Zieldatennetzwerks gemäß der Betriebsfrequenz des mindestens einen Datennetzwerks und der MIPI-Frequenz des Anzeigebildschirms, wobei das Zieldatennetzwerk eines von dem mindestens einen Datennetzwerk ist, das die minimalen Interferenzen mit der MIPI-Frequenz des Anzeigebildschirms aufweist; und
Umschalten (S607) des Datennetzwerks gemäß dem Zieldatennetzwerk.

6. Verfahren nach Anspruch 1, wobei das Reduzieren oder Beseitigen der elektromagnetischen Interferenzen der MIPI des Anzeigebildschirms mit dem Funkfrequenzsystem basierend auf der Interferenzkontrollstrategie Folgendes umfasst:
Erhalten einer MIPI-Frequenz des Anzeigebildschirms und einer Betriebsfrequenz von mindestens einem drahtlosen Kanal in Reaktion auf die Interferenzkontrollstrategie, die einer Szene mit einer niedrigen Echtzeitanforderung entspricht;
Bestimmen eines drahtlosen Zielkanals gemäß der Betriebsfrequenz des mindestens einen drahtlosen Kanals und der MIPI-Frequenz des Anzeigebildschirms, wobei der drahtlose Zielkanal einer von dem mindestens einen drahtlosen Kanal ist, der die minimalen Interferenzen mit der MIPI-Frequenz des Anzeigebildschirms aufweist; und
Umschalten des drahtlosen Kanals gemäß dem drahtlosen Zielkanal.

7. Elektronische Vorrichtung (700), umfassend:
einen Prozessor (710);
einen Speicher (720);
eine Kommunikationsschnittstelle (730); und
ein oder mehrere Programme, die im Speicher gespeichert und für die Ausführung durch den Prozessor konfiguriert sind;
wobei die Programme Anweisungen umfassen, die mit dem Prozessor betreibbar sind, um das Verfahren nach einem der Ansprüche 1 bis 6 auszuführen.

8. Computerlesbares Speichermedium, das ein Computerprogramm für den elektronischen Datenaustausch speichert, wobei das Computerprogramm mit einem Computer betreibbar ist, um das Verfahren nach einem der Ansprüche 1 bis 6 auszuführen.

## Revendications

1. Procédé de contrôle d'interférence électromagnétique destiné à un dispositif électronique et **caractérisé en ce qu'**il comprend :
la détection (S201, S301, S401, S501, S601) d'une interférence électromagnétique entre un système de radiofréquences et un écran d'affichage du dispositif électronique en réponse à la détection que le dispositif électronique se trouve dans une scène prédéfinie, la scène prédéfinie comprenant une scène de jeu ;
en réponse à l'interférence électromagnétique détectée,
la détection (S302) d'une charge d'unité centrale de traitement, UCT, correspondant à la scène prédéfinie, et la détermination (S303) d'une exigence en temps réel de la scène prédéfinie en fonction de la charge détectée ; ou
la détection d'une charge d'unité de traitement graphique, UTG, correspondant à la scène prédéfinie, et la détermination de l'exigence en temps réel de la scène prédéfinie en fonction de la charge détectée ;
l'obtention (S203, S304, S503, S603) d'une stratégie de contrôle d'interférence adaptée à l'exigence en temps réel de la scène prédéfinie, dans lequel la stratégie de contrôle d'interférence comprend la sélection d'une fréquence cible avec aucune interférence ou l'interférence minimum pour un saut de fréquence, la commutation vers un réseau de données ou la négociation d'une commutation de canal avec un routeur ; et
la réduction ou l'élimination (S204, S305, S406) d'une interférence électromagnétique d'une interface de processeur de l'industrie mobile, MIPI, de l'écran d'affichage vers un système de radiofréquences sur la base de la stratégie de contrôle d'interférence.

2. Procédé selon la revendication 1, dans lequel la détection d'une interférence électromagnétique entre le système de radiofréquences et l'écran d'affichage du dispositif électronique comprend :
l'obtention d'au moins une valeur de détection d'une première fréquence et d'une valeur de détection d'une deuxième fréquence, dans lequel la première fréquence est une fréquence de communication du système de radiofréquences, et la deuxième fréquence est une fréquence MIPI de l'écran d'affichage ; et
la détermination d'une interférence électromagnétique entre le système de radiofréquences et l'écran d'affichage du dispositif électronique en fonction d'une liste de canaux d'interférence prédéfinie, de l'au moins une valeur de détection de la première fréquence et de la valeur de détection de la deuxième fréquence, dans lequel la liste de canaux d'interférence prédéfinie contient des niveaux d'interférence d'une fréquence de fonctionnement de la MIPI de l'écran d'affichage sur différents canaux.

3. Procédé selon la revendication 1 ou 2, dans lequel l'obtention de la stratégie de contrôle d'interférence adaptée à l'exigence en temps réel de la scène prédéfinie comprend :
l'interrogation (S403) d'un ensemble de stratégies de contrôle d'interférence prédéfini, dans lequel l'ensemble de stratégies de contrôle d'interférence contient une relation de correspondance entre des stratégies de contrôle d'interférence et des scènes ayant différentes exigences en temps réel ;
l'obtention (S404) d'une stratégie de contrôle d'interférence correspondant à une scène ayant une exigence élevée en temps réel dans la condition de la scène prédéfinie ayant l'exigence élevée en temps réel ; et
l'obtention (S405) d'une stratégie de contrôle d'interférence correspondant à une scène ayant une exigence faible en temps réel dans la condition de la scène prédéfinie ayant l'exigence faible en temps réel.

4. Procédé selon la revendication 1, dans lequel la réduction ou l'élimination de l'interférence électromagnétique de la MIPI de l'écran d'affichage sur le système de radiofréquences basé sur la stratégie de contrôle d'interférence comprend :
l'obtention (S505) d'une plage de fréquences disponible ou d'une fréquence disponible d'une fréquence MIPI de l'écran d'affichage en réponse à la stratégie de contrôle d'interférence correspondant à une scène ayant une exigence élevée en temps réel ;
l'obtention (S506) d'un ensemble de premières fréquences, dans lequel l'ensemble de premières fréquences contient une fréquence d'au moins un canal sans fil utilisé par le dispositif électronique dans la scène prédéfinie ;
la détermination (S507), en fonction de l'ensemble de premières fréquences et d'une quelconque parmi la plage de fréquences disponible et la fréquence disponible, d'une fréquence cible de la fréquence MIPI de l'écran d'affichage ; et
le réglage (S508) de la fréquence MIPI de l'écran d'affichage sur la fréquence cible.

5. Procédé selon la revendication 1, dans lequel la réduction ou l'élimination de l'interférence électromagnétique de la MIPI de l'écran d'affichage sur le système de radiofréquences basé sur la stratégie de contrôle d'interférence comprend :
l'obtention (S605) d'une fréquence MIPI de l'écran d'affichage et d'une fréquence de fonctionnement d'au moins un réseau de données en réponse à la stratégie de contrôle d'interférence correspondant à une scène ayant une exigence faible en temps réel ;
la détermination (S606) d'un réseau de données cible en fonction de la fréquence de fonctionnement de l'au moins un réseau de données et de la fréquence MIPI de l'écran d'affichage, dans lequel le réseau de données cible est un de l'au moins un réseau de données qui a l'interférence minimum avec la fréquence MIPI de l'écran d'affichage ; et
la commutation (S607) d'un réseau de données en fonction du réseau de données cible.

6. Procédé selon la revendication 1, dans lequel la réduction ou l'élimination de l'interférence électromagnétique de la MIPI de l'écran d'affichage sur le système de radiofréquences basé sur la stratégie de contrôle d'interférence comprend :
l'obtention d'une fréquence MIPI de l'écran d'affichage et d'une fréquence de fonctionnement d'au moins un canal sans fil en réponse à la stratégie de contrôle d'interférence correspondant à une scène avec une exigence faible en temps réel ;
la détermination d'un canal sans fil cible en fonction de la fréquence de fonctionnement de l'au moins un canal sans fil et de la fréquence MIPI de l'écran d'affichage, dans lequel le canal sans fil cible est un de l'au moins un canal sans fil qui a l'interférence minimum avec la fréquence MIPI de l'écran d'affichage ; et
la commutation du canal sans fil en fonction du canal sans fil cible.

7. Dispositif électronique (700) comprenant :
un processeur (710) ;
une mémoire (720) ;
une interface de communication (730) ; et
un ou des programmes, stockés dans la mémoire et configurés pour être exécutés par le processeur ;
les programmes comprenant des instructions qui sont adaptées pour fonctionner avec le processeur afin d'exécuter le procédé selon l'une quelconque des revendications 1 à 6.

8. Support de stockage lisible par ordinateur, stockant un programme informatique destiné à un échange de données électroniques, le programme informatique étant adapté pour fonctionner avec un ordinateur afin d'exécuter le procédé selon l'une quelconque des revendications 1 à 6.
